# EUROPEAN PATENT SPECIFICATION

(11) **EP 4 059 366 B1**
(45) Date of publication and mention of the grant of the patent: **01.05.2024**
(21) Application number: 20887120.2
(22) Date of filing: 11.11.2020
(51) Int. Cl.: A24F 40/57, A24F 40/20

(54) **AEROSOL GENERATION DEVICE, AND CONTROL METHOD THEREOF**
AEROSOLERZEUGUNGSVORRICHTUNG UND STEUERUNGSVERFAHREN DAFÜR
DISPOSITIF DE GÉNÉRATION D'AÉROSOL ET PROCÉDÉ DE COMMANDE ASSOCIÉ

(30) Priority: 12.11.2019 CN 201911100357
(43) Date of publication of application: 21.09.2022
(73) Proprietor: Shenzhen First Union Technology Co., Ltd., Shenzhen, Guangdong 518000 (CN)
(72) Inventor: YU, Peixia, Shenzhen, Guangdong 518000 (CN); HU, Ruilong, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2020/128167
(87) International publication number: WO 2021/093778

(56) References cited:
- WO-A1-2016/096482
- CN-A- 104 770 885
- CN-A- 108 991 602
- CN-A- 109 043 667
- CN-A- 109 602 091
- CN-A- 109 907 374
- KR-A- 20180 085 365
- US-A1- 2015 359 263
- US-A1- 2018 084 608
- US-A1- 2019 116 880

## Description

### TECHNICAL FIELD

The present disclosure relates to the field of smoking sets, for example, to an aerosol generation device and a control method thereof.

### BACKGROUND

Products such as cigarettes and cigars are burning tobaccos to produce tobacco smoke during use. People attempt to make products that release compounds without burning so as to replace the tobacco products burning tobaccos. Examples of this kind of products are so called heating devices, also called tobacco heating products, or tobacco heating devices, or aerosol generation devices, which heat rather than burn a material to release compounds. The material, for example, may be a tobacco product or other non-tobacco products or combinations thereof, for example, mixtures which may contain or not contain nicotine.

During the pre-heating stage of existing aerosol generation devices, when the temperature of a heater rises to a target temperature, the heater generally needs to maintain the target temperature for a period of time. The maintaining time is a pre-determined duration value, that is, it is a fixed value. However, such pre-heating mode may result in a following problem. When the initial temperature of the heater is relatively high (greater than the environment temperature), if the above heating mode is still employed, insufficiency of a pre-heating duration may occur, which would impact the mouthfeel for smoking and reduce user experience.

### SUMMARY

The present disclosure provides an aerosol generation device and a control method thereof, aiming to solve the problem of insufficiency of a pre-heating duration in existing aerosol generation devices. CN-A-109 602 091 A discloses a control method and an aerosol generating device.

In a first aspect, an embodiment of the present invention provides a control method for an aerosol generation device as set out in claim 1.

In a second aspect, an embodiment of the present invention provides an aerosol generation device, including a heater and a controller, wherein the controller is configured to execute the control method for the aerosol generation device described in the first aspect.

In a third aspect, an embodiment of the present invention provides a nonvolatile computer readable storage medium having stored therein a computer executable instruction that, when executed by an aerosol generation device, causes the aerosol generation device to execute the method above.

In a fourth aspect, an embodiment of the present invention provides a computer program product including a computer program stored in a nonvolatile computer readable storage medium, wherein the computer program includes a program instruction that, when executed by an aerosol generation device, causes the aerosol generation device, to execute the method above.

The control method for the aerosol generation device provided in the present disclosure controls the heater to rise from the initial temperature to the first pre-determined temperature and maintain the first pre-determined temperature for the first pre-determined duration and controls the sum of the duration of the heater to rise from the initial temperature to the first-pre-determined temperature and the first pre-determined duration to be greater than or equal to the second pre-determined duration, thereby preventing insufficiency of a pre-heating duration, ensuring consistent mouthfeel for smoking, and improving user experience.

### BRIEF DESCRIPTION OF THE DRAWINGS

One or more embodiments are exemplarily illustrated through the image(s) in corresponding drawing(s). These exemplary illustrations do not form restrictions to the embodiments. Elements in the drawings with a same reference number are expressed as similar elements, and the images in the drawings do not form restrictions unless otherwise stated.
FIG. 1 is a flowchart of a control method for an aerosol generation device provided in Embodiment 1 of the present disclosure.
FIG. 2 is a curve of pre-heating temperature of a heater provided in Embodiment 1 of the present disclosure.
FIG. 3 is another curve of pre-heating temperature of a heater provided in Embodiment 1 of the present disclosure.
FIG. 4 is a diagram of an aerosol generation device provided in Embodiment 2 of the present disclosure.
FIG. 5 is a flowchart of control of an aerosol generation device provided in Embodiment 2 of the present disclosure.

### DETAILED DESCRIPTION

For a better understanding of the present disclosure, a detailed description is provided to the present disclosure in conjunction with the drawings and specific embodiments. It is to be noted that when an element is described as "fixed on" another element, it may be directly on the another element, or there might be one or more intermediate elements between them. When one element is described as "connected to" another element, it may be directly connected to the another element, or there might be one or more intermediate elements between them. Terms "upper", "lower", "left", "right," "inner", "outer" and similar expressions used in this description are merely for illustration.

Unless otherwise defined, all technical and scientific terms used in the description have the same meaning as those normally understood by the skill in the technical field of the present disclosure. The terms used in the description of the present disclosure are just for describing specific implementations, not to limit the present disclosure. Terms "and/or" used in the description include any and all combinations of one or more listed items.

### Embodiment 1

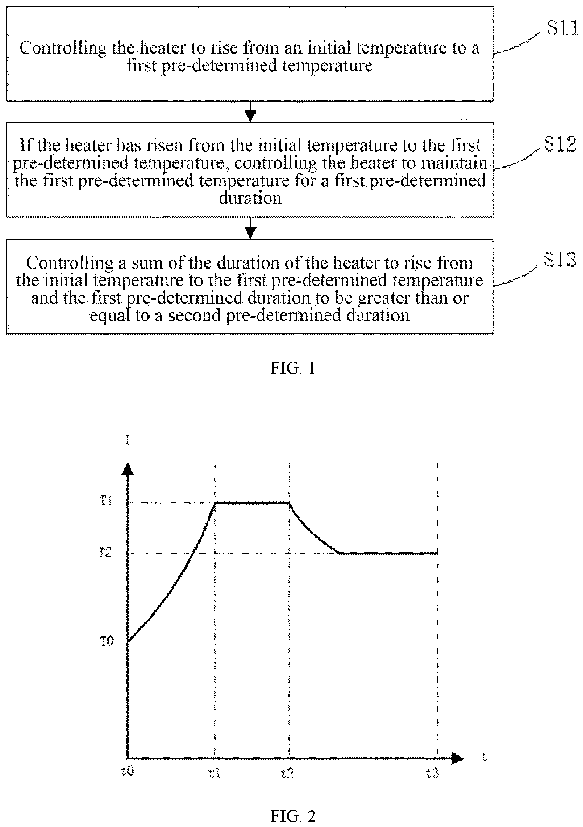

The Embodiment 1 of the present disclosure provides a control method for an aerosol generation device, as shown in FIG. 1.

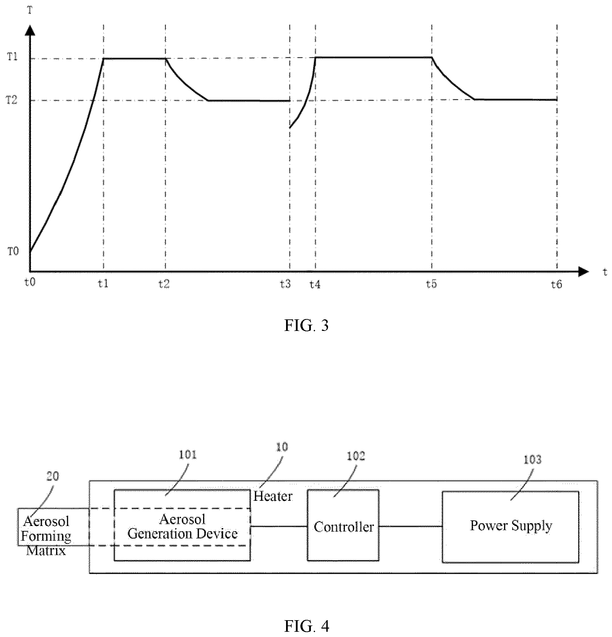

As an example, the aerosol generation device may refer to FIG. 4. The aerosol generation device 10 shown in FIG. 4 includes a heater 101 configured to heat an aerosol forming matrix 20 to generate an aerosol, a controller 102, and a power supply 103 configured to provide power to the heater 101 and the controller 102. For ease of illustration, the following content is described taking the aerosol generation device 10 shown in FIG. 4 as an example.

It is to be noted that the heater 101 may adopt a central heating mode (in which a periphery of a heating body is in direct contact with an aerosol forming matrix) or a peripheral heating mode (in which a tubular heating body encloses an aerosol forming matrix). The heater 101 can also heat the aerosol forming matrix to generate an inhalable aerosol, through one or more modes among heat conduction, electromagnetic induction, chemical reaction, infrared action, resonance, photoelectric conversion and photothermal conversion.

The aerosol forming matrix refers to a matrix capable of releasing volatile compounds that can form an aerosol. The volatile compounds can be released by heating the aerosol forming matrix. The aerosol forming matrix preferably is an aerosol forming liquid matrix and may contain nicotine. The aerosol forming matrix may contain plant based materials. The aerosol forming matrix may include a tobacco-containing material that contains volatile tobacco flavor compounds, and the volatile tobacco flavor compounds, when heated, are released from the aerosol forming matrix. The aerosol forming matrix, alternatively, may include a tobacco-free material.

The aerosol forming matrix may include an aerosol forming agent, and the aerosol forming agent may be any appropriate known compound or mixture of compounds. The compound or mixture of compounds, during usage, are beneficial for densification and stable formation of aerosol, and are resistant to thermal degradation at the operating temperature of the aerosol generating system. Appropriate aerosol forming agents are well known in relevant fields, including but not limited to: polyols, e.g., triethylene glycol, 1,3-butanediol and glycerol; esters of polyols, e.g., glycerol monoacetate, diacetate or triacetate; and fatty acid esters of monocarboxylic, dicarboxylic or polycarboxylic acids, e.g., dimethyldodecane diacid ester and dimethyl tetradecane diacetate. A preferable aerosol forming agent is polyhydroxy alcohols or a mixture thereof, for example, triethylene glycol, 1,3-butanediol, and the most preferable is glycerol.

As shown in FIG. 1, the control method for the aerosol generation device provided in the Embodiment 1 of the present disclosure includes:
S11: controlling the heater to rise from an initial temperature to a first pre-determined temperature.

In the present embodiment, when the aerosol generation device 10 is turned on, if the controller 102 detects that the aerosol generation device 10 has been started by a user, the controller 102 controls a heating power provided to the heater 101 by the power supply 103, thereby controlling the heater 101 to operate at a first pre-determined heating power.

During the heating process of the aerosol generation device 10, the heating power of the heater 101 may be a dynamically changing value, which means the heating power of the heater 101 may not be a fixed value and decreases as the increase of the temperature of the heater 101. As an example, in the beginning, the heating power of the heater 101 uses the full power of the power supply 103 or other pre-determined heating powers to heat, and then it decreases as the increase of the temperature of the heater 101. Specifically, when the aerosol generation device 10 is started, the controller 102 controls the heating power of the heater 101 to use the full power of the power supply 103 or other pre-determined heating powers to heat, and detects a real-time temperature of the heater 101; and after the real-time temperature of the heater 101 reaches a target temperature, the controller adjusts the heating power provided to the heater 101 by the power supply 103. The full power of the power supply 103 may be the maximum power of the power supply, and the specific data may be determined on the basis of the properties of the power supply 103. No further limitation is needed here.

The heating power provided to the heater 101 by the power supply 103 may be provided to the heater 101 in a pulse signal mode, and the controller 102 may control the heating power provided to the heater 101 by the power supply 103 by controlling the width or duty ratio of the pulse signal.

In one embodiment, the process of controlling the heater to rise from an initial temperature to a first pre-determined temperature includes:
acquiring a real-time temperature of the heater within a pre-determined time interval, and comparing the real-time temperature of the heater with the first pre-determined temperature.

In the present embodiment, the controller 102 may acquire the real-time temperature of the heater 101 according to the pre-determined time interval, and the pre-determined time interval may be 10 milliseconds to 5000 milliseconds. In the embodiments of the present disclosure, preferably, the employed time interval is 30 milliseconds to 100 milliseconds.

After the real-time temperature of the heater 101 is acquired, the real-time temperature of the heater 101 is compared with the first pre-determined temperature, for judging whether the real-time temperature of the heater 101 rises to the first pre-determined temperature.

If the real-time temperature of the heater 101 is lower than the first pre-determined temperature, the controller 102 continues controlling the heating power provided to the heater 101 by the power supply 103, so as to increase the temperature of the heater 101.

The first pre-determined temperature may be the optimum temperature of the aerosol forming matrix to generate an aerosol, that is, at this optimum temperature the aerosol forming matrix can provide a smoke volume and temperature most suitable for inhalation and of good mouthfeel. In the embodiments of the present disclosure, preferably, the employed first pre-determined temperature is 220°C to 260°C.

In the present embodiment, the process of acquiring a real-time temperature of the heater includes:
detecting the real-time temperature of the heater through a temperature detection device; or,
determining a real-time resistance value of the heater, and determining, according to a relationship between a resistance value and a temperature of the heater, the real-time temperature corresponding to the real-time resistance value.

Specifically, the real-time temperature of the heater 101 may be detected through a temperature detection device (not shown) connected to the controller 102. The temperature detection device includes but not limited to a temperature sensor and/or a digital temperature detection module. The temperature sensor may be Negative Temperature Coefficient (NTC), Positive Temperature Coefficient (PTC) and the like sensors.

The relationship between a resistance value and a temperature of the heater 101 may be stored in the controller 102 in the form of a relation table, or in the form of a curve. Therefore, after determining the real-time resistance value of the heater 101, the controller 102 may obtain the real-time temperature of the heater 101 by looking up the table or searching in the curve.

In another embodiment, the process of controlling the heater to rise from an initial temperature to a first pre-determined temperature includes:
controlling the heater to heat at a first pre-determined heating power, so that the heater rises from the initial temperature to the first pre-determined temperature.

In the present embodiment, the process of controlling the heater to heat at a first pre-determined heating power, so that the heater rises from the initial temperature to the first pre-determined temperature includes:
determining a real-time resistance value of the heater; and
adjusting a voltage output to the heater, according to the real-time resistance value of the heater and the first pre-determined heating power.

Specifically, during the heating process of the heater 101, the resistance value of the heater 101 changes with temperature, that is, a relationship is formed between the resistance value and the temperature of the heater 101, and different temperatures correspond to different resistance values. Therefore, it is needed to adjust the voltage output to the heater.

The real-time resistance value of the heater 101 may be determined by connecting a standard resistor to the heater 101 in series and then detecting the voltage at two ends of the standard resistor and the heater 101. After the real-time resistance value of the heater 101 and the first pre-determined heating power are determined, the voltage of the heater 101 may be calculated through the formula U=√(P×R), where U represents the voltage of the heater 101, P represents the first pre-determined heating power, and R represents the real-time resistance value of the heater 101. The controller 102 maintains the heating power of the heater 101 by adjusting the voltage output to the heater 101, thereby ensuring the consistent mouthfeel for smoking.

It is to be noted that the embodiments of the present disclosure make no limitation to the determination of the real-time resistance value of the heater 101.

S12: if the heater has risen from the initial temperature to the first pre-determined temperature, controlling the heater to maintain the first pre-determined temperature for a first pre-determined duration.

In the present embodiment, the controller 102 may perform judgment by comparing the real-time temperature of the heater 101 with the first pre-determined temperature. If the real-time temperature of the heater 101 is equal to the first pre-determined temperature, it is determined that the real-time temperature of the heater 101 has risen to the first pre-determined temperature. Then, the controller 102 can control the heating power provided to the heater 101 by the power supply 103, thereby controlling the heater 101 to maintain the first pre-determined temperature for a period of time (that is, the first pre-determined duration), and ensuring the aerosol forming matrix to be fully heated to guarantee the mouthfeel of the first puff.

S13: controlling a sum of the duration of the heater to rise from the initial temperature to the first pre-determined temperature and the first pre-determined duration to be greater than or equal to a second pre-determined duration.

From the foregoing content, when the initial temperature of the heater 101 is relatively high (for example, in the case of smoking two cigarettes successively), insufficiency of a pre-heating duration may occur, which would impact the mouthfeel for smoking and reduce user experience.

To prevent insufficiency of a pre-heating duration, the present disclosure controls the sum of the duration of the heater 101 to rise from the initial temperature to the first-pre-determined temperature and the first pre-determined duration to be greater than or equal to the second pre-determined duration.

Specifically, supposing the duration of the heater 101 to rise from the initial temperature to the first-pre-determined temperature is t1, the first pre-determined duration is t2 and the second pre-determined duration is t3, then the t1+t2 and the t3 need to meet the following relationship: t1+t2≥t3.

In the present embodiment, the value of the first pre-determined duration and/or the second pre-determined duration may be set according to the properties of the aerosol forming matrix, and the value of the second pre-determined duration may be set as twice the value of the first pre-determined duration. In the embodiments of the present disclosure, preferably, the employed first pre-determined duration is 7 seconds to 15 seconds and the second pre-determined duration is 15 seconds to 30 seconds.

The process of controlling a sum of the duration of the heater to rise from the initial temperature to the first pre-determined temperature and the first pre-determined duration to be greater than or equal to a second pre-determined duration includes:
judging whether the sum of the duration of the heater to rise from the initial temperature to the first pre-determined temperature and the first pre-determined duration is greater than or equal to the second pre-determined duration; and
if the sum of the duration of the heater to rise from the initial temperature to the first pre-determined temperature and the first pre-determined duration is greater than or equal to the second pre-determined duration, outputting a prompt signal for inhaling aerosol.

In the present embodiment, after the sum of the duration and the first pre-determined duration is compared with the second pre-determined duration, if the sum of the duration and the first pre-determined duration is greater than or equal to the second pre-determined duration, a prompt signal for inhaling aerosol may be output.

Specifically, a prompt device (not shown) connected to the controller 102 may be employed to perform a prompt operation according to the prompt signal for inhaling aerosol output by the controller 102. For example, the prompt device is a vibration motor, which vibrates to prompt a user that aerosol is ready for inhalation, according to the prompt signal for inhaling aerosol output by the controller 102 (including a start signal to control the vibration motor to operate); alternatively, the prompt device is an LED lamp, which keeps on or flashes to prompt a user that aerosol is ready for inhalation, according to the prompt signal for inhaling aerosol output by the controller 102.

In another embodiment, after judging whether the sum of the duration of the heater to rise from the initial temperature to the first pre-determined temperature and the first pre-determined duration is greater than or equal to the second pre-determined duration, the method further includes:
controlling the heater to maintain a pre-determined temperature range for a third pre-determined duration; or, controlling the heater to maintain a second pre-determined temperature for a third pre-determined duration; wherein both of an upper limit value of the pre-determined temperature range and the value of the second pre-determined temperature are less than the value of the first pre-determined temperature.

In the present embodiment, after the sum of the duration and the first pre-determined duration is compared with the second pre-determined duration, if the sum of the duration and the first pre-determined duration is greater than or equal to the second pre-determined duration, the controller 102 controls the power supply 103 to provide a second pre-determined heating power (the second pre-determined heating power is less than the first pre-determined heating power) to the heater 101, to control the heater 101 to maintain the pre-determined temperature range or the second pre-determined temperature for a period of time (the third pre-determined duration); wherein both of an upper limit value of the pre-determined temperature range and the value of the second pre-determined temperature are less than the value of the first pre-determined temperature. The pre-determined temperature range and the second pre-determined temperature may be determined by collecting a large amount of user data. In specifical settings, a lower limit value of the pre-determined temperature range may be close to or slightly greater than a critical temperature of the aerosol forming matrix being heated to volatilize and generate an aerosol, and may fluctuate around the critical temperature in different smoking stages. The second pre-determined temperature may be the critical temperature of the aerosol forming matrix being heated to volatilize and generate an aerosol.

In the present embodiment, the third pre-determined duration may be set to 180 seconds, or set to a duration of a pre-determined number of puffs, for example, a duration of 15 puffs.

The pre-heating process of the aerosol generation device will become better understood through the following description taken in conjunction with the temperature curves shown in FIG. 2 and FIG. 3 (in which the horizontal axis t represents time and the vertical axis T represents temperature).

As shown in FIG. 2, the duration t0~t3 refers to a duration of smoking of one cigarette, wherein
at t0 time, the temperature of the heater 101 is T0. From the figure, the initial temperature of the heater 101 is relatively high, exceeding the environment temperature.

In the duration t0~t1, the controller 102 controls the heating power of the heater 101 to use the full power of the power supply 103 to heat, for example, the full power of the power supply 103 is 36W. At t1 time, the heater 101 rises to the target temperature T1, for example, 220°C.

In the duration t1~t2, the controller 102 controls the heating power provided to the heater 101 by the power supply 103 and controls the heater 101 to maintain the target temperature T1 (220°C) for a period of time (that is, the duration t1~t2).

At t2 time, if the duration t0~t2 is greater than or equal to a pre-determined duration, the controller 102 outputs a prompt signal for inhaling aerosol, prompting a user to inhale.

From the figure, a prompt signal for inhaling aerosol may be output, by judging whether the real-time temperature of the heater 101 rises to the target temperature T1 and whether the heating time of the duration t0~t2 is greater than or equal to a pre-determined duration, thereby preventing insufficiency of a pre-heating duration, ensuring consistent mouthfeel for smoking, and improving user experience.

In the duration t2~t3, after outputting the prompt signal for inhaling aerosol, the controller 102 controls the heating power provided to the heater 101 by the power supply 103 and controls the temperature of the heater 101 to decrease to T2 (for example, 180°C) from T1 (220°C).

Herein, the duration t2-t3 may be 180 seconds or a duration of 15 puffs.

As shown in FIG. 3, the duration t0~t3 refers to a duration of smoking of a first cigarette, the duration t3~t6 refers to a duration of smoking of a second cigarette, that is, smoking two cigarettes successively, wherein
the duration t0~t3 is different from that in FIG. 2, on which the temperature of the heater 101 is the environment temperature at t0 time. The remaining duration is the same as the FIG. 2, and no further description is needed here.

At t3 time, since the user smokes successively, the heater 101 has residual heat and the residual heat has a temperature far greater than the environment temperature.

In the duration t3~t4, the controller 102 controls the heating power of the heater 101 to use the full power of the power supply 103 to heat, for example, the full power of the power supply 103 is 36W. At t4 time, the heater 101 rises to the target temperature T1, for example, 220°C.

In the duration t4~t5, the controller 102 controls the heating power provided to the heater 101 by the power supply 103 and controls the heater 101 to maintain the target temperature T1 (220°C) for a period of time (that is, the duration t4~t5).

From the figure, the duration t3~t4 is shorter than the duration t0~t1 in FIG. 3, while the duration t4-t5 is longer than the duration t1~t2 in FIG. 3, that is to say, the heating time is dynamically adjusted, ensuring the aerosol forming matrix to be fully heated to guarantee the mouthfeel of the first puff.

At t5 time, if the duration t3~t5 is greater than or equal to a pre-determined duration, the controller 102 outputs a prompt signal for inhaling aerosol, prompting a user to inhale.

In the duration t5~t6, after outputting the prompt signal for inhaling aerosol, the controller 102 controls the heating power provided to the heater 101 by the power supply 103 and controls the temperature of the heater 101 to decrease to T2 (for example, 180°C) from T1 (220°C).

Herein, the duration t5-t6 may be 180 seconds or a duration of 15 puffs.

### Embodiment 2

FIG. 4 is an aerosol generation device provided in Embodiment 2 of the present disclosure. The aerosol generation device can be used to implement the control method for the aerosol generation device illustrated in the forgoing embodiment.

As shown in FIG. 4, the aerosol generation device 10 includes a heater 101, a controller 102 and a power supply 103.

The heater 101 is configured to generate relevant heat according to a heating power provided by the power supply 103, thereby heating an aerosol forming matrix placed in the aerosol generation device 10, so that the aerosol forming matrix generates a relevant aerosol (smoke) for a user to inhale.

The heater 101 may adopt a central heating mode (in which a periphery of a heating body is in direct contact with an aerosol forming matrix) or a peripheral heating mode (in which a tubular heating body encloses an aerosol forming matrix). The heater 101 can also heat the aerosol forming matrix to generate an inhalable aerosol, through one or more modes among heat conduction, electromagnetic induction, chemical reaction, infrared action, resonance, photoelectric conversion and photothermal conversion.

The controller 102 is connected to the heater 101 and the power supply 103 respectively and is configured to control the heating power provided to the heater 101 by the power supply 103, thereby controlling the heating temperature of the heater 101, so that the aerosol forming matrix is heated to generate a relevant aerosol. The controller 102 is configured to implement the control method for the aerosol generation device illustrated in Embodiment 1.

In one embodiment, the aerosol generation device 10 may further include a memory used for storing a pre-heating program corresponding to the control method for the aerosol generation device illustrated in embodiment 1. The controller 102 can read and execute the pre-heating program stored in the memory, thereby implementing the control method for the aerosol generation device illustrated in embodiment 1.

It is to be noted that the memory may be a separate storage device arranged in the aerosol generation device 10, or may be a memory built in the controller 102. The memory is a non-volatile memory.

The power supply 103 is configured to provide power to the heater 101 and the controller 102. The power supply 103 is further configured to adjust the heating power provided to the heater 101 according to the control from the controller 102, thereby changing the temperature of the heater 101. The power supply 103 may include a battery. The battery may be a rechargeable battery, for example, a rechargeable lithium-ion battery, etc.; alternatively, the battery may also be a non-rechargeable battery.

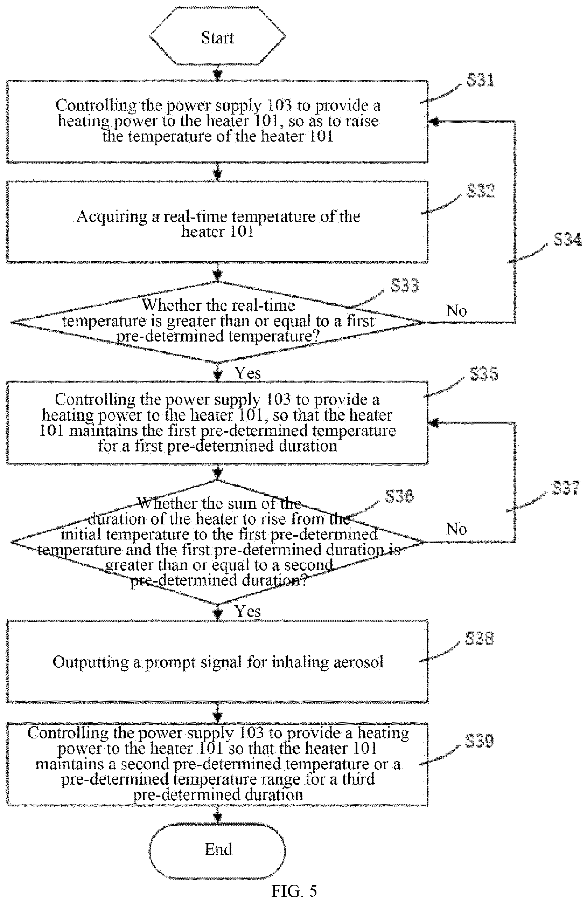

For a better illustration of the control process of the aerosol generation device, description is provided below in conjunction with the flowchart of control shown in FIG. 5.

S31: the controller 102 controls the power supply 103 to provide a heating power to the heater 101, so as to raise the temperature of the heater 101.

S32: the controller 102 acquires a real-time temperature of the heater 101.

S33: the controller 102 compares the real-time temperature of the heater 101 with a first pre-determined temperature.

S34: if the real-time temperature of the heater 101 is less than the first pre-determined temperature, the controller 102 continues controlling the power supply 103 to provide a heating power to the heater 101 so as to raise the temperature of the heater 101.

S35: if the real-time temperature of the heater 101 is greater than or equal to the first pre-determined temperature, the controller 102 controls the power supply 103 to provide a heating power to the heater 101, so that the heater 101 maintains the first pre-determined temperature for a first pre-determined duration.

S36: the controller 102 judges whether the sum of the duration of the heater to rise from the initial temperature to the first pre-determined temperature and the first pre-determined duration is greater than or equal to a second pre-determined duration.

S37: if the sum of the duration of the heater to rise from the initial temperature to the first pre-determined temperature and the first pre-determined duration is less than the second pre-determined duration, the controller 102 controls the power supply 103 to provide a heating power to the heater 101 so that the heater 101 continues maintaining the first pre-determined temperature.

S38: if the sum of the duration of the heater to rise from the initial temperature to the first pre-determined temperature and the first pre-determined duration is greater than or equal to the second pre-determined duration, a prompt signal for inhaling aerosol may be output to a vibration motor or an LED lamp, which then prompts a user to inhale.

S39: the controller 102 controls the power supply 103 to provide a heating power to the heater 101 so that the heater 101 maintains a second pre-determined temperature or a pre-determined temperature range for a third pre-determined duration.

An embodiment of the present disclosure provides a nonvolatile computer readable storage medium having stored therein a computer executable instruction that, when executed by one or more processors, for example, one processor in the aerosol generation device 10 in FIG. 4, can cause the one or more processors in above the aerosol generation device 10 to execute the control method for the aerosol generation device in any method embodiment above, for example, to execute the S11 to S13 of the method in FIG. 1 and the S31 to S39 of the control flow in FIG. 5 described above, and to implement the function of the controller 102 in FIG. 4.

The above device embodiments are merely for exemplary illustration. The unit described as a separate component may be or may not be physically separated; the component, displayed as a unit, may be or may not be a physical unit, that is, it may be located at one place, or may be distributed on a plurality of network units. Part or all modules may be selected to realize the purpose of the embodiment scheme according to actual needs.

Through the description of the above implementations, the ordinary staff in this field can clearly understand that each implementation can be achieved by means of software plus a common hardware platform, of course as well as through hardware. The ordinary staff in this field can understand that all or part of the processes in the above method embodiments may be implemented by instructing related hardware through a computer program which may be stored in a computer readable storage medium and which, when executed, may include, for example, the process of the embodiment of the above methods. The storage medium may be a disk, a compact disk, a Read-Only Memory (ROM) or Random Access Memory (RAM) and the like.

## Claims

1. A control method for an aerosol generation device, the aerosol generation device comprising a heater configured to heat an aerosol forming matrix to generate an aerosol, the method comprising:
controlling the heater to rise from an initial temperature to a first pre-determined temperature;
if the heater has risen from the initial temperature to the first pre-determined temperature, controlling the heater to maintain the first pre-determined temperature for a first pre-determined duration; and
controlling a sum of the duration of the heater to rise from the initial temperature to the first pre-determined temperature and the first pre-determined duration to be greater than or equal to a second pre-determined duration;
**characterized in that**:
the process of controlling comprises:
judging whether the sum of the duration of the heater to rise from the initial temperature to the first pre-determined temperature and the first pre-determined duration is greater than or equal to the second pre-determined duration; and
if the sum of the duration of the heater to rise from the initial temperature to the first pre-determined temperature and the first pre-determined duration is greater than or equal to the second pre-determined duration, outputting a prompt signal for inhaling aerosol.

2. The method according to claim 1, wherein the process of controlling the heater to rise from an initial temperature to a first pre-determined temperature comprises:
acquiring a real-time temperature of the heater within a pre-determined time interval, and comparing the real-time temperature of the heater with the first pre-determined temperature.

3. The method according to claim 2, wherein the process of acquiring a real-time temperature of the heater comprises:
detecting the real-time temperature of the heater through a temperature detection device; or,
determining a real-time resistance value of the heater, and determining, according to a relationship between a resistance value and a temperature of the heater, the real-time temperature corresponding to the real-time resistance value.

4. The method according to claim 2, wherein the pre-determined time interval is 10 milliseconds to 5000 milliseconds.

5. The method according to any one of claims 1 to 4, wherein the process of controlling the heater to rise from an initial temperature to a first pre-determined temperature comprises:
controlling the heater to heat at a first pre-determined heating power, so that the heater rises from the initial temperature to the first pre-determined temperature.

6. The method according to claim 5, wherein the process of controlling the heater to heat at a first pre-determined heating power, so that the heater rises from the initial temperature to the first pre-determined temperature comprises:
determining a real-time resistance value of the heater; and
adjusting a voltage output to the heater, according to the real-time resistance value of the heater and the first pre-determined heating power.

7. The method according to claim 6, wherein after judging whether the sum of the duration of the heater to rise from the initial temperature to the first pre-determined temperature and the first pre-determined duration is greater than or equal to the second pre-determined duration, the method further comprises:
if the sum of the duration of the heater to rise from the initial temperature to the first pre-determined temperature and the first pre-determined duration is greater than or equal to the second pre-determined duration, controlling the heater to maintain a pre-determined temperature range or a second pre-determined temperature for a third pre-determined duration; wherein both of an upper limit value of the pre-determined temperature range and the value of the second pre-determined temperature are less than the value of the first pre-determined temperature.

8. The method according to claim 7, wherein the process of controlling the heater to maintain a pre-determined temperature range or a second pre-determined temperature for a third pre-determined duration comprises:
controlling the heater to heat at a second pre-determined heating power, so that the heater maintains the pre-determined temperature range or the second pre-determined temperature for the third pre-determined duration.

9. The method according to claim 7, wherein third pre-determined duration is 180 seconds or a duration of a pre-determined number of puffs.

10. The method according to any one of claims 1 to 9, wherein the first pre-determined temperature is 220°C to 260°C.

11. The method according to any one of claims 1 to 9, wherein the first pre-determined duration is 7 seconds to 15 seconds, and the second pre-determined duration is 15 seconds to 30 seconds.

12. An aerosol generation device, comprising a heater and a controller, wherein the heater is configured to heat an aerosol forming matrix to generate an aerosol, and the controller is configured to execute the control method for the aerosol generation device according to any one of claims 1 to 11.

13. A nonvolatile computer readable storage medium having stored therein a computer executable instruction that, when executed by an aerosol generation device, causes the aerosol generation device to execute the method according to any one of claims 1 to 11.

14. A computer program product comprising a computer program stored in a nonvolatile computer readable storage medium, wherein the computer program comprises a program instruction that, when executed by an aerosol generation device, causes the aerosol generation device, to execute the method according to any one of claims 1 to 11.

## Patentansprüche

1. Steuerungsverfahren für eine Aerosolerzeugungsvorrichtung, wobei die Aerosolerzeugungsvorrichtung eine Heizvorrichtung umfasst, die so konfiguriert ist, dass sie eine aerosolbildende Matrix erhitzt, um ein Aerosol zu erzeugen, wobei das Verfahren umfasst:
Steuerung der Heizvorrichtung, um von einer Anfangstemperatur auf eine erste vorbestimmte Temperatur zu steigen;
wenn die Heizvorrichtung von der Anfangstemperatur auf die erste vorbestimmte Temperatur angestiegen ist, Steuern der Heizvorrichtung, um die erste vorbestimmte Temperatur für eine erste vorbestimmte Dauer aufrechtzuerhalten; und
Steuern einer Summe der Dauer des Anstiegs der Heizvorrichtung von der Anfangstemperatur auf die erste vorbestimmte Temperatur und der ersten vorbestimmten Dauer, so dass diese größer oder gleich einer zweiten vorbestimmten Dauer ist;
**dadurch gekennzeichnet, dass** das Steuerungsverfahren umfasst:
Bestimmen, ob die Summe aus der Dauer des Anstiegs der Heizvorrichtung von der Anfangstemperatur auf die erste vorbestimmte Temperatur und der ersten vorbestimmten Dauer größer oder gleich der zweiten vorbestimmten Dauer ist; und
wenn die Summe der Dauer des Anstiegs der Heizvorrichtung von der Anfangstemperatur auf die erste vorbestimmte Temperatur und der ersten vorbestimmten Dauer größer oder gleich der zweiten vorbestimmten Dauer ist, Ausgabe eines Aufforderungssignals zum Inhalieren von Aerosol.

2. Verfahren nach Anspruch 1, wobei das Steuerungsverfahren der Heizvorrichtung zum Ansteigen von einer Anfangstemperatur auf eine erste vorbestimmte Temperatur umfasst:
Erfassen einer Echtzeit-Temperatur der Heizvorrichtung innerhalb eines vorbestimmten Zeitintervalls und Vergleichen der Echtzeit-Temperatur der Heizvorrichtung mit der ersten vorbestimmten Temperatur.

3. Verfahren nach Anspruch 2, wobei der Prozess der Erfassung einer Echtzeit-Temperatur der Heizvorrichtung umfasst:
Erfassung der Echtzeit-Temperatur der Heizvorrichtung durch eine Temperaturerfassungsvorrichtung; oder,
Bestimmen eines Echtzeit-Widerstandswertes der Heizvorrichtung und Bestimmen der Echtzeit-Temperatur, die dem Echtzeit-Widerstandswert entspricht, gemäß einer Beziehung zwischen einem Widerstandswert und einer Temperatur der Heizvorrichtung.

4. Verfahren nach Anspruch 2, wobei das vorbestimmte Zeitintervall 10 Millisekunden bis 5000 Millisekunden beträgt.

5. Verfahren nach einem der Ansprüche 1 bis 4, wobei das Steuerungsverfahren der Heizvorrichtung zum Ansteigen von einer Anfangstemperatur auf eine erste vorbestimmte Temperatur umfasst:
Steuerung des Heizvorrichtung zum Aufheizen mit einer ersten vorbestimmten Heizleistung, so dass die Heizvorrichtung von der Anfangstemperatur auf die erste vorbestimmte Temperatur ansteigt.

6. Verfahren nach Anspruch 5, wobei das Steuerungsverfahren der Heizvorrichtung zum Heizen mit einer ersten vorbestimmten Heizleistung, so dass die Heizvorrichtung von der Anfangstemperatur auf die erste vorbestimmte Temperatur ansteigt, umfasst:
Bestimmung eines Echtzeit-Widerstandswertes der Heizvorrichtung; und
Einstellen einer Ausgangsspannung für die Heizvorrichtung entsprechend dem Echtzeit-Widerstandswert der Heizvorrichtung und der ersten vorbestimmten Heizleistung.

7. Verfahren nach Anspruch 6, wobei nach der Bestimmung, ob die Summe der Dauer des Anstiegs der Heizvorrichtung von der Anfangstemperatur auf die erste vorbestimmte Temperatur und der ersten vorbestimmten Dauer größer oder gleich der zweiten vorbestimmten Dauer ist, das Verfahren ferner umfasst:
wenn die Summe der Dauer des Anstiegs der Heizvorrichtung von der Anfangstemperatur auf die erste vorbestimmte Temperatur und der ersten vorbestimmten Dauer größer oder gleich der zweiten vorbestimmten Dauer ist, Steuern der Heizvorrichtung, um einen vorbestimmten Temperaturbereich oder eine zweite vorbestimmte Temperatur für eine dritte vorbestimmte Dauer aufrechtzuerhalten; wobei sowohl ein oberer Grenzwert des vorbestimmten Temperaturbereichs als auch der Wert der zweiten vorbestimmten Temperatur kleiner als der Wert der ersten vorbestimmten Temperatur sind.

8. Verfahren nach Anspruch 7, wobei das Steuerungsverfahren der Heizvorrichtung zur Aufrechterhaltung eines vorbestimmten Temperaturbereichs oder einer zweiten vorbestimmten Temperatur für eine dritte vorbestimmte Dauer umfasst:
Steuern der Heizvorrichtung, um mit einer zweiten vorbestimmten Heizleistung zu heizen, so dass die Heizvorrichtung den vorbestimmten Temperaturbereich oder die zweite vorbestimmte Temperatur für die dritte vorbestimmte Dauer aufrechterhält.

9. Verfahren nach Anspruch 7, wobei die dritte vorbestimmte Dauer 180 Sekunden oder die Dauer einer vorbestimmten Anzahl von Zügen beträgt.

10. Verfahren nach einem der Ansprüche 1 bis 9, wobei die erste vorbestimmte Temperatur 220°C bis 260°C beträgt.

11. Verfahren nach einem der Ansprüche 1 bis 9, wobei die erste vorbestimmte Dauer 7 Sekunden bis 15 Sekunden und die zweite vorbestimmte Dauer 15 Sekunden bis 30 Sekunden beträgt.

12. Aerosolerzeugungsvorrichtung, die eine Heizvorrichtung und eine Steuerung umfasst, wobei die Heizvorrichtung so konfiguriert ist, dass sie eine aerosolbildende Matrix erhitzt, um ein Aerosol zu erzeugen, und die Steuerung so konfiguriert ist, dass sie das Steuerverfahren für die Aerosolerzeugungsvorrichtung nach einem der Ansprüche 1 bis 11 ausführt.

13. Nichtflüchtiges, computerlesbares Speichermedium, in dem ein computerausführbarer Befehl gespeichert ist, der, wenn er von einer Aerosolerzeugungsvorrichtung ausgeführt wird, die Aerosolerzeugungsvorrichtung veranlasst, das Verfahren nach einem der Ansprüche 1 bis 11 auszuführen.

14. Computerprogrammprodukt, das ein in einem nichtflüchtigen, computerlesbaren Speichermedium gespeichertes Computerprogramm umfasst, wobei das Computerprogramm einen Programmbefehl umfasst, der, wenn er von einer Aerosolerzeugungsvorrichtung ausgeführt wird, die Aerosolerzeugungsvorrichtung veranlasst, das Verfahren nach einem der Ansprüche 1 bis 11 auszuführen.

## Revendications

1. Méthode de contrôle pour un dispositif de génération d'aérosol, le dispositif de génération d'aérosol comprenant un dispositif de chauffage configuré pour chauffer une matrice de formation d'aérosol afin de générer un aérosol, la méthode comprenant :
commander le chauffage pour qu'il passe d'une température initiale à une première température prédéterminée ;
si le dispositif de chauffage est passé de la température initiale à la première température prédéterminée, commander le dispositif de chauffage pour maintenir la première température prédéterminée pendant une première durée prédéterminée ; et
contrôler la somme de la durée d'élévation de la température initiale à la première température prédéterminée et de la première durée prédéterminée pour qu'elle soit supérieure ou égale à une deuxième durée prédéterminée ;
**caractérisé par le fait que** le processus de contrôle comprend
juger si la somme de la durée d'élévation de la température initiale à la première température prédéterminée et de la première durée prédéterminée est supérieure ou égale à la seconde durée prédéterminée ; et
si la somme de la durée d'élévation de la température initiale à la première température prédéterminée et de la première durée prédéterminée est supérieure ou égale à la deuxième durée prédéterminée, un signal d'invite à l'inhalation de l'aérosol est émis.

2. La méthode selon la revendication 1, dans laquelle le processus de commande du chauffage pour passer d'une température initiale à une première température prédéterminée comprend :
l'acquisition d'une température en temps réel du dispositif de chauffage dans un intervalle de temps prédéterminé, et la comparaison de la température en temps réel du dispositif de chauffage avec la première température prédéterminée.

3. La méthode selon la revendication 2, dans laquelle le processus d'acquisition d'une température en temps réel de l'élément chauffant comprend :
en détectant la température en temps réel de l'appareil de chauffage au moyen d'un dispositif de détection de la température ; ou,
déterminer une valeur de résistance en temps réel du dispositif de chauffage, et déterminer, en fonction d'une relation entre une valeur de résistance et une température du dispositif de chauffage, la température en temps réel correspondant à la valeur de résistance en temps réel.

4. La méthode selon la revendication 2, dans laquelle l'intervalle de temps prédéterminé est compris entre 10 millisecondes et 5000 millisecondes.

5. La méthode selon l'une des revendications 1 à 4, dans laquelle le processus de commande du chauffage pour passer d'une température initiale à une première température prédéterminée comprend :
commander le chauffage à une première puissance de chauffage prédéterminée, de sorte que le chauffage passe de la température initiale à la première température prédéterminée.

6. La méthode selon la revendication 5, dans lequel le processus de commande de l'élément chauffant pour chauffer à une première puissance de chauffage prédéterminée, de sorte que l'élément chauffant passe de la température initiale à la première température prédéterminée, comprend :
déterminer une valeur de résistance en temps réel de l'élément chauffant ; et
réglage d'une tension de sortie vers l'élément chauffant, en fonction de la valeur de résistance en temps réel de l'élément chauffant et de la première puissance de chauffage prédéterminée.

7. La méthode selon la revendication 6, dans lequel, après avoir déterminé si la somme de la durée d'élévation du chauffage de la température initiale à la première température prédéterminée et de la première durée prédéterminée est supérieure ou égale à la seconde durée prédéterminée, le procédé comprend en outre :
si la somme de la durée d'élévation du chauffage de la température initiale à la première température prédéterminée et de la première durée prédéterminée est supérieure ou égale à la deuxième durée prédéterminée, commander le chauffage pour maintenir une plage de température prédéterminée ou une deuxième température prédéterminée pendant une troisième durée prédéterminée ; dans ce cas, la valeur limite supérieure de la plage de température prédéterminée et la valeur de la deuxième température prédéterminée sont toutes deux inférieures à la valeur de la première température prédéterminée.

8. La méthode selon la revendication 7, dans lequel le processus de commande du dispositif de chauffage pour maintenir une plage de température prédéterminée ou une deuxième température prédéterminée pendant une troisième durée prédéterminée comprend :
commander le chauffage à une deuxième puissance de chauffage prédéterminée, de sorte que le chauffage maintienne la plage de température prédéterminée ou la deuxième température prédéterminée pendant la troisième durée prédéterminée.

9. La méthode selon la revendication 7, dans laquelle la troisième durée prédéterminée est de 180 secondes ou la durée d'un nombre prédéterminé de bouffées.

10. La méthode selon l'une des revendications 1 à 9, dans laquelle la première température prédéterminée est comprise entre 220°C et 260°C.

11. La méthode selon l'une des revendications 1 à 9, dans laquelle la première durée prédéterminée est comprise entre 7 et 15 secondes, et la deuxième durée prédéterminée entre 15 et 30 secondes.

12. Dispositif de génération d'aérosol, comprenant un dispositif de chauffage et un contrôleur, dans lequel le dispositif de chauffage est configuré pour chauffer une matrice de formation d'aérosol afin de générer un aérosol, et le contrôleur est configuré pour exécuter la méthode de contrôle pour le dispositif de génération d'aérosol selon l'une des revendications 1 à 11.

13. Support de stockage lisible par ordinateur non volatil sur lequel est stockée une instruction exécutable par ordinateur qui, lorsqu'elle est exécutée par un dispositif de génération d'aérosol, amène le dispositif de génération d'aérosol à exécuter la méthode selon l'une des revendications 1 à 11.

14. Produit programme d'ordinateur comprenant un programme d'ordinateur stocké sur un support de stockage lisible par ordinateur non volatile, dans lequel le programme d'ordinateur comprend une instruction de programme qui, lorsqu'elle est exécutée par un dispositif de génération d'aérosol, amène le dispositif de génération d'aérosol à exécuter la méthode selon l'une des revendications 1 à 11.
